(19) Europäisches Patentamt
European Patent Office
Office européen des brevets

(11) **EP 3 492 503 A1**

(12) **EUROPÄISCHE PATENTANMELDUNG**

(43) Veröffentlichungstag:
**05.06.2019  Patentblatt 2019/23**

(51) Int Cl.:
***C08G 18/46*** *(2006.01)*     ***C08G 73/10*** *(2006.01)*
***C08G 73/16*** *(2006.01)*

(21) Anmeldenummer: **17204379.6**

(22) Anmeldetag: **29.11.2017**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(71) Anmelder: **Covestro Deutschland AG
51373 Leverkusen (DE)**

(72) Erfinder: **Die Erfindernennung liegt noch nicht vor**

(74) Vertreter: **Levpat
c/o Covestro AG
Gebäude 4825
51365 Leverkusen (DE)**

(54) **IMIDHALTIGE POLYESTER**

(57)     Die vorliegende Erfindung betrifft ein spezielles Verfahren zur Herstellung von Hydroxylgruppen-terminierten, Imidgruppen-haltigen Polyester-Polyolen, diese Polyester selbst, sowie deren Verwendung zur Herstellung von Polyurethanen.

EP 3 492 503 A1

**Beschreibung**

Die vorliegende Erfindung betrifft ein spezielles Verfahren zur Herstellung von Hydroxylgruppen-terminierten, Imidgruppen-haltigen Polyester-Polyolen, diese Polyester selbst, sowie deren Verwendung zur Herstellung von Polyurethanen.

In US 3,217,014 B1 und der Veröffentlichung "Synthesis and Properties of Polyesterimides and their Isomers", Sukumar Maiti and Sajal Das, Journal of Applied Polymer Sciene, Vol. 26, 957-978 (1981), Wiley & Sons, Inc. wird eine Synthese von Hydroxylgruppen-terminierten, Imidgruppen-haltigen Polyester-Polyolen beschrieben. Dazu wird zunächst Trimelitsäure oder Hemimellitsäure, bzw. deren Anhydrid, mit p, o oder m-Aminobenzoesäure zu einer aromatischen Imidgruppen-haltigen Dicarbonsäure kondensiert und diese dann mit einem Alkohol verestert. In beiden Fällen werden zur Herstellung der Imidgruppen-haltigen Dicarbonsäure große Mengen an Lösungsmittel wie DMF verwendet. Dies macht einen sehr aufwendigen Aufreinigungsschritt erforderlich, in dem das Lösemittel entfernt wird, bevor die Dicarbonsäure der Veresterung zugeführt werden kann.

Die in den Schriften beschriebenen Hydroxylgruppen-terminierten Imidgruppen-haltigen Polyester-Polyole weisen hohe Schmelzpunkte oberhalb 250°C auf, wodurch sie zur Verwendung als Reaktionspartner von Isocyanaten bei der Polyurethanherstellung nicht geeignet sind.

Aufgabe der vorliegenden Erfindung war die Bereitstellung eines deutlich einfacheren und damit wirtschaftlicheren Verfahrens zur Herstellung von Hydroxylgruppen-terminierten, Imidgruppen-haltigen Polyester-Polyolen als aus dem Stand der Technik bekannt. Darüber hinaus sollten die Polyester-Polyole sich zum Einsatz bei der Polyurethanherstellung eignen. Ein dritter Aspekt war außerdem die Verwendung von biobasierten Rohstoffen als kostengünstige und nachhaltige Alternative zu den technisch erhältlichen Rohstoffen.

Gegenstand der vorliegenden Erfindung ist ein Verfahren zur Herstellung von Hydroxylgruppen-terminierten Polyester-Polyolen (A), dadurch gekennzeichnet, dass in einem ersten Verfahrensschritt zunächst Imidgruppen-enthaltende Mono- oder Polycarbonsäuren (B) durch Umsetzung von

(B.1) mindestens einer Aminosäure, welche eine oder mehrere Aminogruppen und eine oder mehrere Säuregruppen aufweist, mit
(B.2) mindestens einem Carbonsäureanhydrid, welches eine oder mehrere Anhydridgruppen und gegebenenfalls eine oder mehrere freie Säuregruppen aufweist,
in Gegenwart von
(C) mindestens einem Di- und/oder Polyol mit einem Molekulargewicht von 62 bis 1000 g/mol,

hergestellt werden, und in einem zweiten Verfahrensschritt das im ersten Verfahrensschritt erhaltene Reaktionsgemisch

- bevorzugt ohne Aufreinigung,
- *gegebenenfalls* unter Zusatz von weiterer Komponente B.2 und/oder weiterer Komponente C und/oder (D) weiteren Mono- und/oder Polycarbonsäuren, die nicht unter die Definition der Komponenten (B) und (B.2) fallen,

unter Polykondensationsbedingungen verestert wird,
wobei gegebenenfalls im ersten Verfahrensschritt und/oder im zweiten Verfahrensschritt Hilfs- und Zusatzstoffe (E) verwendet werden.

Als Komponente B.2 bzw. Komponente C können im zweiten Verfahrensschritt die gleichen oder andere Verbindungen eingesetzt werden wie/als im ersten Verfahrensschritt.

Im vorliegenden Verfahren dient Komponente (C) zunächst, d.h. im ersten Verfahrensschritt, als Lösemittel für die Komponenten (B.1) und (B.2), so dass kein weiteres Lösemittel zugegeben werden muss. In einer bevorzugten Ausführungsform wird im ersten Verfahrensschritt neben Komponente (C) maximal eine Menge, deren Volumen kleiner ist als das gemeinsame Volumen der Komponenten (B.1), (B.2) und (C), an weiteren Lösemitteln zugegeben. In einer besonders bevorzugten Ausführungsform werden im ersten Verfahrensschritt neben Komponente (C) keine weiteren Lösemittel zugegeben. Als ggf. zu verwendende "weitere Lösungsmittel" seien lediglich beispielhaft genannt aliphatische und aromatische Kohlenwasserstoffe (z.B. Benzine, Toluol), Monoalkohole (Ethanol), Ether (THF), Ester (Ethylacetat), Ketone (Aceton), Halogenkohlenwasserstoffe (Methylenchlorid), Stickstoff- und Schwefelverbindungen (DMF, DMSO). Im zweiten Verfahrensschritt dient Komponente (C) als Kondensationspartner für Komponente (B) und die gegebenenfalls zugegebene Komponente (D).

Da neben Komponente (C) im ersten Verfahrensschritt kein weiteres Lösemittel zugegeben werden muss, liegt der Vorteil des Erfindungsgemäßen Verfahrens gegenüber dem Stand der Technik demzufolge darin, dass das Produkt aus dem ersten Verfahrensschritt nicht aufgereinigt werden muss, d.h. nicht von zugegebenem Lösemittel befreit werden muss, bevor es der Veresterung zugeführt wird. Somit kann die Synthese als Eintopfsynthese durchgeführt werden.

Gegenstand der vorliegenden Erfindung ist auch ein Verfahren wie zuvor beschrieben, wobei zur Herstellung der Hydroxylgruppen-terminierten Polyester-Polyolen (A) neben den Komponenten (B.1), (B.2), (C), (D) und (E) eine weitere Komponenten (F) verwendet wird und der Anteil der Komponenten (B.1), (B.2), (C), (D) und (E) an der Gesamtmenge aller eingesetzten Komponenten ≥ 80, bevorzugt ≥ 90, besonders bevorzugt ≥ 95 Gewichtsprozent beträgt. Komponente (F) umfasst Di- und Polyole, die nicht unter die Definition der Komponente (C) fallen.

Bevorzugt ist die zuerst beschriebene Verfahrensvariante, bei der ausschließlich die Komponenten (B.1), (B.2), (C), (D) und (E), nicht (F) eingesetzt werden.

Der erste Verfahrensschritt wird bevorzugt bei Temperaturen von 25°C bis 200 °C, besonders bevorzugt von 80 bis 180 °C durchgeführt. Der zweite Verfahrensschritt wird unter Polykondensationsbedingungen durchgeführt; das bedeutet im Rahmen der vorliegenden Erfindung bei Temperaturen von bevorzugt 150 bis 250 °C, besonders bevorzugt von 180 bis 220°C und bei vermindertem Druck im Bereich von bevorzugt 0,1 bis 300 mbar, besonders bevorzugt 1 bis 200 mbar.

Bevorzugt werden im ersten Verfahrensschritt Aminosäuren, Carbonsäureanhydride und Di/Polyole zusammen in einer Apparatur vorgelegt und unter Rühren bei Normaldruck erhitzt. Besonders bevorzugt ist hierbei eine Fahrweise die eine Umsetzung der Aminosäuren mit dem Carbonsäureanhriden zu Imiden ermöglicht ohne bereits eine Veresterung zwischen Carbonsäuregruppen und Di/Polyol durchzuführen. Dies lässt sich über Bestimmung der Aminzahl, Säurezahl und OH-Zahl des Reaktionsgemischs bestimmen. Im ersten Verfahrensschritt kann auch bereits entstehendes Wasser über eine Kolonne abdestilliert werden. Dies wird nicht als Aufreinigung im Sinne der Erfindung verstanden.

Im zweiten Verfahrensschritt wird die Reaktionsmischung, bevorzugt ohne Zugabe weiterer Stoffe, so hoch erhitzt, dass die Veresterung stattfindet und Reaktionswasser über eine Kolonne abdestilliert wird. Bevorzugt ist hierbei eine Fahrweise bei der ein Großteil des freiwerdenden Wassers im Normaldruck abgespalten wird und anschließend, ggf. nach Zugabe eines Veresterungskatalysators, das restliche Reaktionswasser im Unterdruck abdestilliert wird. Bevorzugt ist ein Verfahren, dass nach Abspaltung der zu erwartenden Wassermenge ein Produkt mit einer Säurezahl < 3 mg KOH/g, besonders bevorzugt < 1 mg KOH/g, und einer Aminzahl < 3 mg KOH/g, besonders bevorzugt < 1 mg KOH/g und der gewünschten OH-Zahl liefert. Gegebenenfalls kann die gewünschte OH-Zahl durch Zusatz weiterer Di/Polyole, gefolgt von einer Äquilibrierung des Gemisches im Vakuum bei 150-250 °C eingesellt werden.

Ein weiterer Gegenstand der vorliegenden Erfindung sind Hydroxylgruppen terminierte Polyester-Polyole (A), die erhältlich sind nach dem Verfahren wie zuvor beschrieben, und die bevorzugt einen Schmelzpunkt < 23°C, besonders bevorzugt ≤ 20°C aufweisen.

Ein weiterer Gegenstand der vorliegenden Erfindung sind Hydroxylgruppen terminierte Polyester-Polyole (A), die erhältlich sind aus

> (B) Imidgruppen enthaltenden Mono- oder Polycarbonsäuren,
> die durch Umsetzung von

>> (B.1) mindestens einer Aminosäure, welche eine oder mehrere Aminogruppen und eine oder mehrere Säuregruppen aufweist, mit
>> (B.2) mindestens einem Carbonsäureanhydrid, welches eine oder mehrere Anhydridgruppen und gegebenenfalls eine oder mehrere freie Säuregruppen aufweist,

> erhältlich sind,
> (C) mindestens einem Di- und/oder Polyol mit einem Molekulargewicht von 62 bis 1000 g/mol,
> (D) gegebenenfalls weiteren Mono- und/oder Polycarbonsäuren, die nicht unter die Definition der Komponenten (B) und (B.2) fallen,
> (E) gegebenenfalls Hilfs- und Zusatzstoffen
> und gegebenenfalls weiterer Komponente (B.2), sowie gegebenenfalls weiterer Komponente (C),
> und bevorzugt einen Schmelzpunkt < 23°C, besonders bevorzugt ≤ 20°C aufweisen.

Ebenso sind Gegenstand der vorliegenden Erfindung Hydroxylgruppen-terminierte Polyester-Polyolen (A) wie zuvor beschrieben, wobei jedoch zu ihrer Herstellung neben den Komponenten (B.1), (B.2), (C), (D) und (E) eine weitere Komponente (F) verwendet wird und der Anteil der Komponenten (B.1), (B.2), (C), (D) und (E) an der Gesamtmenge aller eingesetzten Komponenten ≥ 80, bevorzugt ≥ 90, besonders bevorzugt ≥ 95 Gewichtsprozent beträgt. Komponente F umfasst Di- und Polyole, die nicht unter die Definition der Komponente C fallen.

Bevorzugt sind Hydroxylgruppen-terminierte Polyester-Polyolen (A) für deren Herstellung ausschließlich die Komponenten (B.1), (B.2), (C), (D) und (E) eingesetzt werden.

Die erfindungsgemäßen Hydroxylgruppen-terminierten Polyester-Polyole (A) weisen OH-Zahlen von 20 bis 500 mg KOH/g, bevorzugt von 30 bis 400 mg KOH/g, besonders bevorzugt von 35 bis 350 mg KOH/g, zahlenmittlere Funktionaltäten von 1,4 bis 3,5, bevorzugt von 1,5 bis 2,6 auf. Weiterhin handelt es sich bei den erfindungsgemäßen Polyester-Polyole um homogene Flüssigkeiten ohne Feststoffanteil, deren Farbe von farblos bis braun variieren kann.

Bevorzugt besitzen die erfindungsgemäßen Polyester-Polyole (A) eine Viskosität bei 25 °C < 20000 mPa*s, besonders bevorzugt < 5000 mPa*s bei 25 °C. Die erfindungsgemäßen Polyester-Polyole (A) besitzen Schmelzpunkte < 23°C, bevorzugt ≤ 20°C, sodass es bei Lagerung bei Raumtemperatur (23°C) nicht zur Bildung von Kristallen kommen kann.

Beschreibung der Komponenten:

Komponente (B):

Bei Komponente (B) handelt es sich um Imidgruppen-enthaltende Mono- und Polycarbonsäuren.

Die Herstellung der Komponente (B) erfolgt durch Umsetzung von Komponente (B.1) mit Komponente (B.2).

Dabei werden die Mengen an Aminosäuren und Carbonsäureanhydriden so gewählt, dass das molare Verhältnis von Aminogruppen aus den Aminosäuren (B.1) zu Anhydridgruppen aus den Carbonsäureanhydriden (B.2) im Bereich von 1,5:1 bis 1:1,5, bevorzugt 0,9:1 bis 1:0,9, besonders bevorzugt 0,95:1 bis 1:0,95 liegt.

Komponente (B.1):

Komponente (B.1) umfasst Aminosäuren, welche eine oder mehrere Aminogruppen und eine oder mehrere Säuregruppen aufweisen.

Dazu gehören beispielsweise gesättigte oder ungesättigte, lineare oder verzweigte, aliphatische oder cycloaliphatische Aminosäuren oder gegebenenfalls verzweigte aromatische Aminosäuren, mit bevorzugt bis zu 20, besonders bevorzugt bis zu 10 Kohlenstoffatomen (einschließlich der C-Atome der Carbonsäuregruppen), die gegebenenfalls Heteroatome aus der Reihe Sauerstoff (ungeachtet der Sauerstoffatome der freien Säuregruppen), Schwefel, Stickstoff (ungeachtet der Stickstoffatome der Aminogruppen) und Halogene aufweisen. Bevorzugt weisen die Aminosäuren bis zu 2 Aminogruppen und bis zu 2 Säuregruppen auf.

Beispielhaft seien die folgenden Aminosäuren genannt:

Anthranilsäure (o-Aminobenzoesäure), m-Aminobenzoesäure, p-Aminobenzoesäure, Alanin, Arginin, Asparagin, Asparaginsäure, Cystein, Glutamin, Glutaminsäure, Glycin, Histidin, Isoleucin, Leucin, Lysin, Methionin, Phenylalanin, Serin, Threonin, Tryptophan, Tyrosin, Valinm, Ornithin, 3-Aminopropionsäure, 2-Aminobuttersäure, 4-Aminobuttersäure, 6-Aminocapronsäure, 2-Amino-2-methylpropionsäure, 11-Aminoundecansäure, Homoserin.

Bevorzugt sind die Aminosäuren (B.1) ausgewählt aus der Gruppe bestehend aus o-, m-, oder p-Aminobenzoesäure, Glutaminsäure, Asparaginsäue oder Lysin.

Die Aminosäuren können einzeln oder in Mischung im erfindungsgemäßen Verfahren eingesetzt werden.

Komponente (B.2):

Komponente (B.2) umfasst Carbonsäureanhydride, welche eine oder mehrere Anhydridgruppen und gegebenenfalls eine oder mehrere freie Säuregruppen aufweisen.

Dazu gehören beispielsweise gesättigte oder ungesättigte, lineare oder verzweigte, aliphatische oder cycloaliphatische Carbonsäureanhydride oder gegebenenfalls verzweigte aromatische Carbonsäureanhydride mit bevorzugt bis zu 20, besonders bevorzugt bis zu 10 Kohlenstoffatomen (einschließlich der C-Atome der Anhydrid- und freien Carbonsäuregruppen), die gegebenenfalls Heteroatome aus der Reihe Sauerstoff (ungeachtet der Sauerstoffatome der Anhydridgruppen oder der freien Säuregruppen), Schwefel, Stickstoff und Halogene aufweisen.

Bevorzugt weisen die Carbonsäureanhydride bis zu 3 Anhydridgruppen und bis zu 2 freie Säuregruppen auf. Besonders bevorzugt weisen die Carbonsäureanhydride keine oder 1 freie Säuregruppe auf.

Beispielhaft seien die folgenden Carbonsäureanhydride genannt:

Phthalsäureanhydrid, Tetrachlorphthalsäureanhydrid, 3-Chloro-Phthalsäureanhydrid, Trimellitsäureanhydrid, Hemimellitsäureanhydrid, Mellitsäureanhydrid, Pyromellitsäuredianhydrid, Maleinsäureanhydrid, Citraconsäureanhydrid, Itaconsäureanhydrid, Bernsteinsäureanhydrid, 3,4,9,10-Perylentetracarbonsäuredianhydrid, 1,4,5,8-Naphthalintetracarbonsäuredianhydrid, 1,8- Naphthalsäureanhydrid, 3,3',4,4'-Biphenyltetracarbonsäuredianhydrid, Derivate der genannten Anhydride, wie z.B. Alkyl- oder Alkenylbernsteinsäuren mit unverzweigten oder verzweigten C1 bis C24 -Alkyl- bzw. - Alkenylketten, wie (1-Dodecen-1-yl) oder (2-Dodecen-1-yl)bernsteinsäureanhydrid, n-Octenyl-Bernsteinsäureanhydrid, Tetradecenylbernsteinsäureanhydrid, Hexadecenylbernstein-säureanhydrid, Octadecenylbernsteinsäureanhydrid, Alkyl- und/oder Alkenylmaleinsäuren mit unverzweigten oder verzweigten C1 bis C24 -Alkyl- bzw. -Alkenylketten, wie Dimethylmaleinsäureanhydrid, n-Dodecenylmaleinsäureanhydrid, und Diels-Alder-Adduke aus Furanen und z.B.

Maleinsäureanhydrid.

Bevorzugt sind die Carbonsäureanhydride (B.2) ausgewählt aus der Gruppe bestehend aus Phthalsäureanhydrid, Trimellitsäureanhydrid, Hemimellitsäureanhydrid, Mellitsäureanhydrid und Pyromellitsäureanhydrid.

Die Carbonsäureanhydride können einzeln oder in Mischung im erfindungsgemäßen Verfahren eingesetzt werden.

Komponente (C):

Bei Komponente (C) handelt es sich um niedermolekulare Di- und Polyole mit einem Molekulargewicht von 62 bis 1000 g/mol, bevorzugt von 62 bis 450 g/mol.

Dazu zählen monomere und polymere Verbindungen. Bei den Polymeren entspricht das Molekulargewicht dem zahlenmittleren Molekulargewicht.

Bevorzugt weisen die einzusetzenden Di- und Polyole eine Funktionalität von 2 bis 4, besonders bevorzugt 2 bis 3 auf.

Beispielhaft seien die folgenden Di- und Polyole genannt:

i) Ethylenglykol, 1,2-Propandiol, 1,3-Propandiol, 1,4-Butandiol, 2-Methylpropandiol-1,3, 1,5-Pentandiol, Neopentylglykol 1,6-Hexandiol, 3-Methylpentan-1,5-diol, 2,3-Butandiol, Diethylenglykol, Triethylenglykol, Tetraethylenglykol, Dipropylenglykol, Tripropylenglykol, sowie Glycerin, 1,1,1-Trimethylolpropan, Pentaerythrit, Rizinusöl und Oligomere des 1,4-Butylenglykols.

ii) Polyetherpolyole (insbesondere Poly(oxyalkylen)polyole):

Die Herstellung der Polyetherpolyole erfolgt nach bekannten Methoden, vorzugsweise durch basenkatalysierte Polyaddition von Alkylenoxiden an polyfunktionelle, aktive Wasserstoffatome aufweisende Starterverbindungen, wie z.B. Alkohole oder Amine. Als Alkohole oder Amine seien beispielhaft genannt: Ethylenglykol, Diethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke, Rizinusöl, Wasser, Methylamin, Ethylamin, Propylamin, Butylamin, Anilin, Benzylamin, o- und p-Toluidin, $\alpha$,$\beta$- Naphthylamin, Ammoniak, Ethylendiamin, Propylendiamin, 1,4-Butylendiamin, 1,2-, 1,3-, 1,4-, 1,5- und/oder 1,6-Hexamethylendiamin, o-, m-, und p-Phenylendiamin, 2,4-, 2,6-Toluylendiamin, 2,2'-, 2,4- und 4,4'-Diaminodiphenylmethan und Diethylendiamin.

Als Alkylenoxide kommen bevorzugt Ethylenoxid, Propylenoxid, Butylenoxid sowie deren Mischungen zum Einsatz. Verfahren zur Herstellung solcher Polyetherpolyole werden in "Kunststoffhandbuch, Band 7, Polyurethane", in "Reaction Polymers" sowie z.B. in US-A 1 922 451, US-A 2 674 619, US-A 1 922 459, US-A 3 190 927 und US-A 3 346 557 beschrieben.

iii) Polyesterpolyole:

Methoden zur Herstellung von Polyesterpolyolen sind ebenfalls gut bekannt und z.B. beschrieben in den beiden oben genannten Literaturstellen ("Kunststoffhandbuch, Band 7, Polyurethane", "Reaction Polymers"). Die Polyesterpolyole werden i.a. durch Polykondensation von mehrfunktionellen Carbonsäuren oder deren Derivaten, wie z.B. Säurechloriden oder -anhydriden, mit mehrfunktionellen Hydroxylverbindungen hergestellt.

Als mehrfunktionelle Carbonsäuren können beispielsweise verwendet werden: Adipinsäure, Phthalsäure, Isophthalsäure, Terephthalsäure, Oxalsäure, Bernsteinsäure, Glutarsäure, Azelainsäure, Sebacinsäure, Fumarsäure oder Maleinsäure.

Als mehrfunktionelle Hydroxylverbindungen können beispielsweise verwendet werden: Ethylenglykol, Diethylenglykol, Triethylenglykol, 1,2-Propylenglykol, Dipropylenglykol, 1,3-Butandiol, 1,4-Butandiol, 1,6-Hexandiol, 1,12-Dodecandiol, Neopentylglykol, Trimethylolpropan, Triethylolpropan, Rizinusöl oder Glycerin.

Die Herstellung der Polyesterpolyole kann weiterhin auch durch Ringöffnungspolymerisation von Lactonen (z.B. Caprolacton) mit Diolen und/oder Triolen als Starter erfolgen.

Bevorzugt werden Ethylenglykol, Diethylenglykol, 1,2-Propylenglykol, 1,4-Butandiol, besonders bevorzugt wird Ethylenglykol und Diethylenglykol eingesetzt.

Die Di- und Polyole können einzeln oder in Mischung im erfindungsgemäßen Verfahren eingesetzt werden.

Komponente (D):

Komponente (D) umfasst weitere Mono- und/oder Polycarbonsäuren, die nicht unter die Definition der Komponenten (B) und (B.2) fallen.

Dazu gehören beispielsweise gesättigte oder ungesättigte, lineare oder verzweigte, aliphatische oder cycloaliphatische Mono- und/oder Polycarbonsäuren oder gegebenenfalls verzweigte aromatische Mono- und/oder Polycarbonsäuren, mit bevorzugt bis zu 20, besonders bevorzugt bis zu 10 Kohlenstoffatomen (einschließlich der C-Atome der Carbonsäuregruppen), die gegebenenfalls Heteroatome aus der Reihe Sauerstoff (ungeachtet der Sauerstoffatome der Säuregruppen), Schwefel, Stickstoff und Halogene aufweisen. Bevorzugt weisen die Carbonsäuren (D) bis zu 2 Säuregruppen auf.

Beispielhaft seien die folgenden Mono- und Polycarbonsäuren genannt:

Oxalsäure, Malonsäure, Bernsteinsäure, Glutarsäure, Adipinsäure, Pimelinsäure, Korksäure, Azelainsäure, Sebacinsäure, Undecandisäure, Dodecandisäure, Brassylsäure, Tetradecandisäure, Thapsiasäure, Phthalsäure, Isophthalsäure, Terephthalsäure, Maleinsäure, Fumarsäure, Citraconsäure, Mesaconsäure, Ölsäure, Ricinolsäure, Furandicarbonsäure.

Bevorzugt sind die Mono- und Polycarbonsäuren (D) ausgewählt aus der Gruppe bestehend aus Bernsteinsäure, Glutarsäure, Adipinsäure, Phthalsäure, Therephthalsäure, Ölsäure, Ricinolsäure.

Die Mono- und Polycarbonsäuren können einzeln oder in Mischung im erfindungsgemäßen Verfahren eingesetzt werden.

Komponente (E):

Bei Komponente (E) handelt es sich um Hilfs- und Zusatzstoffe, die im Rahmen des ersten und/oder zweiten Verfahrensschrittes dem Reaktionsgemisch hinzugefügt werden können. So können im ersten Verfahrensschritt die Imidbildung katalysierende Verbindungen zugesetzt werden, wie z.B. *p*-Toluolsulfonsäure, Isochinolin, 4-(Dimethylamino)-pyridin, Pyridin, Tri-ethylamin, Zinkacetat, Essigsäure, Phosphorsäure, Natriumacetat, Benzoesäure oder Schwefelsäure.

Ebenso können dem Reaktionsgemisch Katalysatoren zur Katalyse der Veresterungsreaktion hinzugefügt werden. Hier seien beispielhaft genannt: Zinn(II)-Salze, wie z.B Zinndichlorid, Zinndichlorid-Dihydrat, Zinn(II)-2-ethylhexanoat, Dibutylzinndilaurat; Titanalkoxylate, wie z.B. Titantetrabutanolat, Tetraisopropyltitanat; Bismuth(III)-neodecanoat; Zink(II)-acetat; Mangan(II)-acetat oder Protonsäuren, wie z.B. *p*-Toluolsulfonsäure. Weiterhin können die Veresterungen auch durch Enzyme, wie z.B. Esterasen und/oder Lipasen, katalysiert werden.

Weitere Hilfs- und Zusatzstoffe umfassen z.B. Flammschutzmittel, oberflächenaktive Zusatzstoffe (Tenside), wie Emulgatoren und Schaumstabilisatoren, Reaktionsverzögerern (z.B. sauer reagierende Stoffe wie Salzsäure oder organische Säurehalogenide), Zellreglern (wie beispielsweise Paraffine oder Fettalkohole oder Dimethylpolysiloxane), Pigmenten, Farbstoffen, Stabilisatoren gegen Alterungs- und Witterungseinflüsse, Weichmachern, fungistatisch und bakteriostatisch wirkende Substanzen, Füllstoffen (wie beispielsweise Bariumsulfat, Kieselgur, Ruß- oder Schlämmkreide) und Trennmittel.

Komponente (F):

Komponente (F) umfasst z.B. Di- und Polyole, die nicht unter die Definition der Komponente (C) fallen. Dies können Di- und Polyole mit einem Molekulargewicht > 1000 g/mol und/oder Polyole mit Funktionalitäten > 4 sein. Dabei handelt es sich beispielsweise um Polyesterpolyole, Polyetherpolyole, Polyethercarbonatpolyole, Polyethercarbonatpolyole, wie sie für die Herstellung von homogenen und von zellförmigen Polyurethanen an sich bekannt sind und wie sie z.B. in der EP-A 0 007 502, Seiten 8 - 15, beschrieben werden.

Biobasierte Komponenten

In einer bevorzugten Ausführungsform werden die Hydroxylgruppen-terminierte Polyester-Polyole (A) gemäß dem erfindungsgemäßen Verfahren hergestellt, wobei mindestens eine der Komponenten (B.1), (B.2), (C), (D), (E) und (F) biobasiert ist.

Im Rahmen der vorliegenden Erfindung bedeutet biobasiert "hergestellt aus nachwachsenden Rohstoffen". Dies umfasst Verbindungen, die aus nachwachsenden Rohstoffen isoliert oder daraus hergestellt werden. Dazu im Gegensatz stehen Verbindungen, die aus fossilen Rohstoffen, wie Erdöl, Erdgas oder Kohle, hergestellt werden.

Bei den aus nachwachsenden Rohstoffen isolierten Verbindungen handelt es sich beispielsweise um natürliche Polyole, wie z.B. Rizinusöl.

Bei den aus nachwachsenden Rohstoffen hergestellten Verbindungen handelt es sich beispielsweise um natürliche Aminosäuren, oder um Di-oder Polyole, wie z.B. Glycerin, Ethylenglykol, Diethylenglykol, 1,3-Propandiol, 1,4-Butandiol, 1,6-Hexandiol und Polyole aus Pflanzenölen, wie z.B. Rizinusöl, Lesquerellaöl, Rapsöl, Sojaöl und/oder aus ungesättigten Fettsäuren, wie z.B. Ölsäure oder Rizinolsäure. Weiterhin können aus nachwachsenden Rohstoffen hergestellte Carbonsäuren, wie z.B. Bernsteinsäure, Adipinsäure, Korksäure, Sebacinsäure oder Azelainsäure eingesetzt werden.

Polyetherole auf Basis nachwachsender Rohstoffe sind beispielsweise durch ringöffnende Polymerisation von Alkylenoxiden unter Verwendung von biobasierten Startermolekülen herstellbar. Als biobasierte Startermoleküle können z.B. neben Sorbitol, Zucker oder Glycerin auch hydroxylgruppenhaltige Fettsäureester und/ oder hydroxylmodifizierte Fettsäureester, zum Beispiel hydroxygruppenhaltige Fette oder Öle und/ oder hydroxylmodifizierte Fettderivate, wie fettbasierte Dimerdiole, verwendet werden. Als Beispiele sind in diesem Zusammenhang das Rizinusöl und das Lesquerellaöl zu erwähnen, die beide bereits von Natur aus über Hydroxygruppen verfügen. Bei den sonstigen natürlichen Ölen, wie beispielsweise Sojabohnenöl, Sonnenblumenöl, Rapsöl oder Palmöl, muss für eine Umsetzung mit den Alkylenoxiden die Einführung von Hydroxygruppen durch chemische Umsetzungen erfolgen, da diese im Allgemeinen Triglyceride von gesättigten und ungesättigten Fettsäuren sind und somit von Natur aus keine Hydroxygruppen beinhalten.

Die gemäß der Erfindung erhältlichen Hydroxylgruppen-terminierte Polyester-Polyole (A) finden Verwendung bei der Herstellung von Polyurethanen, vorzugsweise Polyurethanschaumstoffen (Hart- und Weichschaumstoffe). Dazu werden sie mit Isocyanaten zur Reaktion gebracht. Die Herstellung von Schaumstoffen auf Isocyanatbasis ist an sich bekannt und z.B. in DE-A 1 694 142, DE-A 1 694 215 und DE-A 1 720 768 sowie im Kunststoff-Handbuch Band VII, Polyurethane, herausgegeben von Vieweg und Höchtlein, Carl Hanser Verlag München 1966, sowie in der Neuauflage dieses Buches, herausgegeben von G. Oertel, Carl Hanser Verlag München, Wien 1993, beschrieben. Vorzugsweise weisen die unter Verwendung der erfindungsgemäßen Polyester-Polyole (A) hergestellten Polyurethanweichschaumstoffe Kennzahlen von 70 bis 130, bevorzugt 80 bis 120 und Raumgewichte von 4 bis 600 kg/m$^3$, bevorzugt 60 bis 120 kg/m$^3$. Vorzugsweise weisen die unter Verwendung der erfindungsgemäßen Polyester-Polyole (A) hergestellten Polyurethanhartschaumstoffe Kennzahlen von 70 bis 500, bevorzugt 100 bis 350 und Raumgewichte von 10 bis 1000 kg/m$^3$, bevorzugt 20 bis 120 kg/m$^3$. Die Kennzahl (Isocyanat Index) gibt das prozentuale Verhältnis der tatsächlich eingesetzten Isocyanat-Menge zur stöchiometrischen, d.h. berechneten Isocyanat-Gruppen (NCO)-Menge an:

$$\text{Kennzahl} = [(\text{Isocyanat-Menge eingesetzt}) : (\text{Isocyanat-Menge berechnet})] \bullet 100 \qquad (VI)$$

Die Verwendung der erfindungsgemäßen Hydroxylgruppen-terminierten Polyester-Polyole (A) zur Herstellung von Polyurethanen, vorzugsweise Polyurethanschaumstoffen ist ebenfalls Gegenstand der Erfindung.

Darüber hinaus sind die so erhältlichen Polyurethane, bevorzugt Polyurethanschaumstoffe ein weiterer Gegenstand der vorliegenden Erfindung.

Die erfindungsgemäß erhältlichen Polyurethanschaumstoffe, finden beispielsweise folgende Anwendung: Dämmplatten, Metall-Sandwichpaneele, Kühlgeräteisolieren, Rohrisolierung, Montageschaum, Möbelpolsterungen, Textileinlagen, Matratzen, Automobilsitze, Kopfstützen, Armlehnen, Schwämme, Schaumstofffolien zur Verwendung in Automobilteilen wie beispielsweise Dachhimmeln, Türseitenverkleidungen, Sitzauflagen und Bauelemente

In einer ersten Ausführungsform betrifft die Erfindung Verfahren zur Herstellung von Hydroxylgruppen-terminierten Polyester-Polyolen (A), dadurch gekennzeichnet, dass in einem ersten Verfahrensschritt zunächst Imidgruppen-enthaltende Mono- oder Polycarbonsäuren (B) durch Umsetzung von

(B.1) mindestens einer Aminosäure, welche eine oder mehrere Aminogruppen und eine oder mehrere Säuregruppen aufweist, mit
(B.2) mindestens einem Carbonsäureanhydrid, welches eine oder mehrere Anhydridgruppen und gegebenenfalls eine oder mehrere freie Säuregruppen aufweist,
in Gegenwart von
(C) mindestens einem Di- und/oder Polyol mit einem Molekulargewicht von 62 bis 1000 g/mol,

hergestellt werden, und in einem zweiten Verfahrensschritt das im ersten Verfahrensschritt erhaltene Reaktionsgemisch

- bevorzugt ohne Aufreinigung,
- *gegebenenfalls* unter Zusatz von weiterer Komponente (B.2) und/oder weiterer Komponente (C) und/oder (D) weiteren Mono- und/oder Polycarbonsäuren, die nicht unter die Definition der Komponenten (B) und (B.2) fallen,

unter Polykondensationsbedingungen verestert wird,

wobei gegebenenfalls im ersten Verfahrensschritt und/oder im zweiten Verfahrensschritt Hilfs- und Zusatzstoffe (E) verwendet werden.

In einer zweiten Ausführungsform betrifft die Erfindung ein Verfahren zur Herstellung von Hydroxylgruppen-terminierten Polyester-Polyolen (A) gemäß Ausführungsform 1, wobei im ersten Verfahrensschritt neben Komponente C kein weiteres Lösemittel zugesetzt wird.

In einer dritten Ausführungsform betrifft die Erfindung ein Verfahren zur Herstellung von Hydroxylgruppen-terminierten Polyester-Polyolen (A) gemäß Ausführungsform 1 oder 2, dadurch gekennzeichnet, dass der erste Verfahrensschritt bei Temperaturen von 25°C bis 200 °C, bevorzugt von 80 bis 180 °C durchgeführt wird und dass der zweite Verfahrensschritt bei Temperaturen von 150 bis 250 °C, bevorzugt von 180 bis 220°C und bei vermindertem Druck im Bereich von 0,1 bis 300 mbar, bevorzugt 1 bis 200 mbar durchgeführt wird.

In einer vierten Ausführungsform betrifft die Erfindung ein Verfahren zur Herstellung von Hydroxylgruppen-terminierten Polyester-Polyolen (A) gemäß Ausführungsform 1 oder 2, dadurch gekennzeichnet, dass der erste Verfahrensschritt bei Temperaturen von 25°C bis 200 °C, und dass der zweite Verfahrensschritt bei Temperaturen von 150 bis 250 °C und bei vermindertem Druck im Bereich von 0,1 bis 300 mbar, bevorzugt 1 bis 200 mbar durchgeführt wird.

In einer fünften Ausführungsform betrifft die Erfindung ein Verfahren zur Herstellung von Hydroxylgruppen-terminierten Polyester-Polyolen (A) gemäß Ausführungsform 1 oder 2, dadurch gekennzeichnet, dass der erste Verfahrensschritt bei Temperaturen von 80 bis 180 °C, und dass der zweite Verfahrensschritt bei Temperaturen von 180 bis 220°C und bei vermindertem Druck im Bereich von 0,1 bis 300 mbar, bevorzugt 1 bis 200 mbar durchgeführt wird.

In einer sechsten Ausführungsform betrifft die Erfindung ein Verfahren zur Herstellung von Hydroxylgruppen-terminierten Polyester-Polyolen (A) gemäß einer der Ausführungsformen 1 bis 5, wobei bei der Herstellung der Hydroxylgruppen-terminierten Polyester-Polyole (A) neben den Komponenten (B.1), (B.2), (C), (D) und (E) eine weitere Komponenten (F) verwendet wird, bei der es sich um Di- und Polyole, die nicht unter die Definition der Komponente C fallen, handelt, und wobei und der Anteil der Komponenten (B.1), (B.2), (C), (D) und (E) an der Gesamtmenge aller eingesetzten Komponenten ≥ 80, bevorzugt ≥ 90, besonders bevorzugt ≥ 95 Gewichtsprozent beträgt.

In einer siebten Ausführungsform betrifft die Erfindung ein Verfahren zur Herstellung von Hydroxylgruppen-terminierten Polyester-Polyolen (A) gemäß einer der Ausführungsformen 1 bis 5, wobei bei Herstellung der Hydroxylgruppen-terminierten Polyester-Polyole (A) ausschließlich die Komponenten (B.1), (B.2), (C), (D) und (E) eingesetzt werden.

In einer achten Ausführungsform betrifft die Erfindung ein Verfahren zur Herstellung von Hydroxylgruppen-terminierten Polyester-Polyolen (A) gemäß einer der Ausführungsformen 1 bis 7, wobei bei der Umsetzung der Komponenten (B.1) und (B.2) das molare Verhältnis von Aminogruppen aus den Aminosäuren (B.1) zu Anhydridgruppen aus den Carbonsäureanhydriden (B.2) im Bereich von 1,5:1 bis 1:1,5, bevorzugt 0,9:1 bis 1:0,9, besonders bevorzugt 0,95:1 bis 1:0,95 liegt.

In einer neunten Ausführungsform betrifft die Erfindung ein Verfahren zur Herstellung von Hydroxylgruppen-terminierten Polyester-Polyolen (A) gemäß einer der Ausführungsformen 1 bis 8, dadurch gekennzeichnet, dass die Aminosäuren (B.1) ausgewählt sind aus der Gruppe bestehend aus Monoamino-monocarbonsäure, Monoamino-dicarbonsäure, Diamino-monocarbonsäure und Diamino-dicarbonsäure.

In einer zehnten Ausführungsform betrifft die Erfindung ein Verfahren zur Herstellung von Hydroxylgruppen-terminierten Polyester-Polyolen (A) gemäß einer der Ausführungsformen 1 bis 9, dadurch gekennzeichnet, dass die Aminosäuren (B.1) ausgewählt sind aus der Gruppe bestehend aus Anthranilsäure (o-Aminobenzoesäure), m-Aminobenzoesäure, p-Aminobenzoesäure, Alanin, Arginin, Asparagin, Asparaginsäure, Cystein, Glutamin, Glutaminsäure, Glycin, Histidin, Isoleucin, Leucin, Lysin, Methionin, Phenylalanin, Serin, Threonin, Tryptophan, Tyrosin, Valin, Ornithin, 3-Aminopropionsäure, 2-Aminobuttersäure, 4-Aminobuttersäure, 6-Aminocapronsäure, 2-Amino-2-methylpropionsäure, 11-Aminoundecansäure, Homoserin.

In einer elften Ausführungsform betrifft die Erfindung ein Verfahren zur Herstellung von Hydroxylgruppen-terminierten Polyester-Polyolen (A) gemäß einer der Ausführungsformen 1 bis 10, dadurch gekennzeichnet, dass die Carbonsäureanhydride (B.2) ausgewählt sind aus der Gruppe bestehend aus Phthalsäureanhydrid, Tetrachlorphthalsäureanhydrid, 3-Chloro-Phthalsäureanhydrid, Trimellitsäureanhydrid, Hemimellitsäureanhydrid, Mellitsäureanhydrid, Pyromellitsäuredianhydrid, Maleinsäureanhydrid, Citraconsäureanhydrid, Itaconsäureanhydrid, Bernsteinsäureanhydrid, 3,4,9,10-Perylentetracarbonsäuredianhydrid, 1,4,5,8-Naphthalintetracarbonsäuredianhydrid, 1,8- Naphthalsäureanhydrid, 3,3',4,4'-Biphenyltetracarbonsäuredianhydrid, Derivate der genannten Anhydride, wie z.B. Alkyl- oder Alkenylbernsteinsäuren mit unverzweigten oder verzweigten C1 bis C24 -Alkyl- bzw. - Alkenylketten, wie (1-Dodecen-1-yl) oder 2-Dodecen-1-yl)bernsteinsäureanhydrid, n-Octenyl-Bernsteinsäureanhydrid, Tetradecenylbernsteinsäureanhydrid, Hexadecenylbernstein-säureanhydrid, Octadecenylbernsteinsäureanhydrid, Alkyl- und/oder Alkenylmaleinsäuren mit unverzweigten oder verzweigten C1 bis C24 -Alkyl- bzw. -Alkenylketten, wie Dimethylmaleinsäureanhydrid, n-Dodecenylmaleinsäureanhydrid, und Diels-Alder-Adduke aus Furanen und z.B. Maleinsäureanhydrid.

In einer zwölften Ausführungsform betrifft die Erfindung ein Verfahren zur Herstellung von Hydroxylgruppen-terminierten Polyester-Polyolen (A) gemäß einer der Ausführungsformen 1 bis 11, dadurch gekennzeichnet, die Di- und Polyole (C) ausgewählt sind aus der Gruppe bestehend aus Ethylenglykol, 1,2-Propandiol, 1,3-Propandiol, 1,4-Butandiol, 2-Methylpropandiol-1,3, 1,5-Pentandiol, Neopentylglykol 1,6-Hexandiol, 3-Methylpentan-1,5-diol, 2,3-Butandiol, Diethylenglykol, Triethylenglykol, Tetraethylenglykol, Dipropylenglykol, Tripropylenglykol, sowie Glycerin, 1,1,1-Trimethylolpropan, Pentaerythrit, Rizinusöl, Oligomere des 1,4-Butylenglykols, Polyetherpolyole, wie Poly(oxyalkylen)polyole und Polyesterpolyole.

In einer dreizehnten Ausführungsform betrifft die Erfindung ein Verfahren zur Herstellung von Hydroxylgruppen-terminierten Polyester-Polyolen (A) gemäß einer der Ausführungsformen 1 bis 12, wobei Komponente D zwingend eingesetzt wird.

In einer vierzehnten Ausführungsform betrifft die Erfindung ein Verfahren zur Herstellung von Hydroxylgruppen-terminierten Polyester-Polyolen (A) gemäß einer der Ausführungsformen 1 bis 13, dadurch gekennzeichnet, dass die Mono- und/oder Polycarbonsäuren (D) ausgewählt sind aus der Gruppe bestehend aus Oxalsäure, Malonsäure, Bernsteinsäure, Glutarsäure, Adipinsäure, Pimelinsäure, Korksäure, Azelainsäure, Sebacinsäure, Undecandisäure, Dodecandisäure, Brassylsäure, Tetradecandisäure, Thapsiasäure, Phthalsäure, Isophthalsäure, Terephthalsäure, Maleinsäure, Fumarsäure, Citraconsäure, Mesaconsäure, Ölsäure, Ricinolsäure und Furandicarbonsäure.

In einer fünfzehnten Ausführungsform betrifft die Erfindung ein Verfahren zur Herstellung von Hydroxylgruppen-terminierten Polyester-Polyolen (A) gemäß einer der Ausführungsformen 1 bis 14, dadurch gekennzeichnet dass die Hydroxylgruppen-terminierten Polyester-Polyole (A) OH-Zahlen von 20 bis 500 mg KOH/g und zahlenmittlere Funktionaltäten von 1,4 bis 3,5, aufweisen.

In einer sechzehnten Ausführungsform betrifft die Erfindung ein Verfahren zur Herstellung von Hydroxylgruppen-terminierten Polyester-Polyolen (A) gemäß einer der Ausführungsformen 1 bis 15, dadurch gekennzeichnet, dass mindestens eine der Komponenten (B.1), (B.2), (C), (D), (E) und (F) biobasiert ist.

In einer siebzehnten Ausführungsform betrifft die Erfindung Hydroxylgruppen terminierte Polyester-Polyole (A), die erhältlich sind nach dem Verfahren gemäß einem der Ansprüche 1 bis 16, und die bevorzugt einen Schmelzpunkt < 23°C, besonders bevorzugt ≤ 20°C aufweisen.

In einer achtzehnten Ausführungsform betrifft die Erfindung Hydroxylgruppen terminierte Polyester-Polyole (A), die erhältlich sind aus

(B) Imidgruppen enthaltenden Mono- oder Polycarbonsäuren, die durch Umsetzung von

(B.1) mindestens einer Aminosäure, welche eine oder mehrere Aminogruppen und eine oder mehrere Säuregruppen aufweist, mit

(B.2) mindestens einem Carbonsäureanhydrid, welches eine oder mehrere Anhydridgruppen und gegebenenfalls eine oder mehrere freie Säuregruppen aufweist,

erhältlich sind,
(C) mindestens einem Di- und/oder Polyol mit einem Molekulargewicht von 62 bis 1000 g/mol,
(D) gegebenenfalls weiteren Mono- und/oder Polycarbonsäuren, die nicht unter die Definition der Komponenten (B) und (B.2) fallen,
(E) gegebenenfalls Hilfs- und Zusatzstoffen
und gegebenenfalls weiterer Komponente (B.2), sowie gegebenenfalls weiterer Komponente (C),

und bevorzugt einen Schmelzpunkt < 23°C, besonders bevorzugt ≤ 20°C aufweisen.

In einer neunzehnten Ausführungsform betrifft die Erfindung Hydroxylgruppen-terminierten Polyester-Polyolen (A) gemäß Ausführungsform 17 oder 18, wobei bei der Herstellung der Hydroxylgruppen-terminierten Polyester-Polyole (A) neben den Komponenten (B.1), (B.2), (C), (D) und (E) eine weitere Komponenten (F) verwendet wird, bei der es sich um Di- und Polyole, die nicht unter die Definition der Komponente C fallen, handelt, und wobei und der Anteil der Komponenten (B.1), (B.2), (C), (D) und (E) an der Gesamtmenge aller eingesetzten Komponenten ≥ 80, bevorzugt ≥ 90, besonders bevorzugt ≥ 95 Gewichtsprozent beträgt.

In einer zwanzigsten Ausführungsform betrifft die Erfindung Hydroxylgruppen-terminierten Polyester-Polyolen (A) gemäß einer der Ausführungsformen 17 bis 19, wobei bei Herstellung der Hydroxylgruppen-terminierten Polyester-Polyole (A) ausschließlich die Komponenten (B.1), (B.2), (C), (D) und (E) eingesetzt werden.

In einer einundzwanzigsten Ausführungsform betrifft die Erfindung Hydroxylgruppen-terminierten Polyester-Polyolen (A) gemäß einer der Ausführungsformen 17 bis 20, wobei bei der Umsetzung der Komponenten (B.1) und (B.2) das molare Verhältnis von Aminogruppen aus den Aminosäuren (B.1) zu Anhydridgruppen aus den Carbonsäureanhydriden (B.2) im Bereich von 1,5:1 bis 1:1,5, bevorzugt 0,9:1 bis 1:0,9, besonders bevorzugt 0,95:1 bis 1:0,95 liegt.

In einer zweiundzwanzigsten Ausführungsform betrifft die Erfindung Hydroxylgruppen-terminierten Polyester-Polyolen (A) gemäß einer der Ausführungsformen 17 bis 21, dadurch gekennzeichnet, dass die Aminosäuren (B.1) ausgewählt sind aus der Gruppe bestehend aus Monoamino-monocarbonsäure, Monoamino-dicarbonsäure, Diamino-monocarbonsäure und Diamino-dicarbonsäure.

In einer dreiundzwanzigsten Ausführungsform betrifft die Erfindung Hydroxylgruppen-terminierten Polyester-Polyolen (A) gemäß einer der Ausführungsformen 17 bis 22, dadurch gekennzeichnet, dass die Aminosäuren (B.1) ausgewählt sind aus der Gruppe bestehend aus Anthranilsäure (o-Aminobenzoesäure), m-Aminobenzoesäure, p-Aminobenzoesäure, Alanin, Arginin, Asparagin, Asparaginsäure, Cystein, Glutamin, Glutaminsäure, Glycin, Histidin, Isoleucin, Leucin, Lysin, Methionin, Phenylalanin, Serin, Threonin, Tryptophan, Tyrosin, Valin, Ornithin, 3-Aminopropionsäure, 2-Aminobuttersäure, 4-Aminobuttersäure, 6-Aminocapronsäure, 2-Amino-2-methylpropionsäure, 11-Aminoundecansäure, Homoserin.

In einer vierundzwanzigsten Ausführungsform betrifft die Erfindung Hydroxylgruppen-terminierten Polyester-Polyolen (A) gemäß einer der Ausführungsformen 17 bis 23, dadurch gekennzeichnet, dass die Carbonsäureanhydride (B.2) ausgewählt sind aus der Gruppe bestehend aus Phthalsäureanhydrid, Tetrachlorphthalsäureanhydrid, 3-Chloro-Phthalsäureanhydrid, Trimellitsäureanhydrid, Hemimellitsäureanhydrid, Mellitsäureanhydrid, Pyromellitsäuredianhydrid, Maleinsäureanhydrid, Citraconsäureanhydrid, Itaconsäureanhydrid, Bernsteinsäureanhydrid, 3,4,9,10-Perylentetracarbonsäuredianhydrid, 1,4,5,8-Naphthalintetracarbonsäuredianhydrid, 1,8- Naphthalsäureanhydrid, 3,3',4,4'-Biphenyltetracarbonsäuredianhydrid, Derivate der genannten Anhydride, wie z.B. Alkyl- oder Alkenylbernsteinsäuren mit unverzweigten oder verzweigten C1 bis C24 -Alkyl- bzw. - Alkenylketten, wie (1-Dodecen-1-yl) oder 2-Dodecen-1-yl)bernsteinsäureanhydrid, n-Octenyl-Bernsteinsäureanhydrid, Tetradecenylbernsteinsäureanhydrid, Hexadecenylbernsteinsäureanhydrid, Octadecenylbernsteinsäureanhydrid, Alkyl- und/oder Alkenylmaleinsäuren mit unverzweigten oder verzweigten C1 bis C24 -Alkyl- bzw. -Alkenylketten, wie Dimethylmaleinsäureanhydrid, n-Dodecenylmaleinsäureanhydrid, und Diels-Alder-Adduke aus Furanen und z.B. Maleinsäureanhydrid.

In einer fünfundzwanzigsten Ausführungsform betrifft die Erfindung Hydroxylgruppen-terminierten Polyester-Polyolen (A) gemäß einer der Ausführungsformen 17 bis 24, dadurch gekennzeichnet, die Di- und Polyole (C) ausgewählt sind aus der Gruppe bestehend aus Ethylenglykol, 1,2-Propandiol, 1,3-Propandiol, 1,4-Butandiol, 2-Methylpropandiol-1,3, 1,5-Pentandiol, Neopentylglykol 1,6-Hexandiol, 3-Methylpentan-1,5-diol, 2,3-Butandiol, Diethylenglykol, Triethylenglykol, Tetraethylenglykol, Dipropylenglykol, Tripropylenglykol, sowie Glycerin, 1,1,1-Trimethylolpropan, Pentaerythrit, Rizinusöl, Oligomere des 1,4-Butylenglykols, Polyetherpolyole, wie Poly(oxyalkylen)polyole und Polyesterpolyole.

In einer sechsundzwanzigsten Ausführungsform betrifft die Erfindung Hydroxylgruppen-terminierten Polyester-Polyolen (A) gemäß einer der Ausführungsformen 17 bis 25, wobei Komponente (D) zwingend eingesetzt wird.

In einer siebenundzwanzigsten Ausführungsform betrifft die Erfindung Hydroxylgruppen-terminierten Polyester-Polyolen (A) gemäß einer der Ausführungsformen 17 bis 26, dadurch gekennzeichnet, dass die Mono- und/oder Polycarbonsäuren (D) ausgewählt sind aus der Gruppe bestehend aus Oxalsäure, Malonsäure, Bernsteinsäure, Glutarsäure, Adipinsäure, Pimelinsäure, Korksäure, Azelainsäure, Sebacinsäure, Undecandisäure, Dodecandisäure, Brassylsäure, Tetradecandisäure, Thapsiasäure, Phthalsäure, Isophthalsäure, Terephthalsäure, Maleinsäure, Fumarsäure, Citraconsäure, Mesaconsäure, Ölsäure, Ricinolsäure und Furandicarbonsäure.

In einer achtundzwanzigsten Ausführungsform betrifft die Erfindung Hydroxylgruppen-terminierten Polyester-Polyolen (A) gemäß einer der Ausführungsformen 17 bis 27, dadurch gekennzeichnet dass die Hydroxylgruppen-terminierten Polyester-Polyole (A) OH-Zahlen von 20 bis 500 mg KOH/g und zahlenmittlere Funktionaltäten von 1,4 bis 3,5, aufweisen.

In einer neunundzwanzigsten Ausführungsform betrifft die Erfindung Hydroxylgruppen-terminierten Polyester-Polyolen (A) gemäß einer der Ausführungsformen 17 bis 28, dadurch gekennzeichnet, dass mindestens eine der Komponenten (B.1), (B.2), (C), (D), (E) und (F) biobasiert ist.

In einer dreizigsten Ausführungsform betrifft die Erfindung die Verwendung der Hydroxylgruppen-terminierte Polyester-Polyole (A) gemäß einem der Ansprüche 17 bis 29 zur Herstellung von Polyurethanen, bevorzugt Polyurethan-Schäumen.

**1. Methoden und Materialien**

1.1 Verwendete Rohstoffe:

| | |
|---|---|
| Trimellitsäureanhydrid | (Fluka) |
| Anthranilsäure | (Sigma-Aldrich) |
| Essigsäure | (Fisher Scientific) |
| Glutarsäure, techn. | (Lanxess AG) |

| | |
|---|---|
| Adipinsäure | (BASF) |
| Phthalsäureanhydrid | (My-ChemGmbH) |
| Diethylenglykol | (Sigma-Aldrich) |
| Ethylenglykol | (Ineos) |
| DL-Glutaminsäure | (Sigma-Aldrich) |
| DL -Asparaginsäure | (abcr) |
| DL -Lysin | (Sigma-Aldrich) |
| $SnCl_2 \cdot 2H_2O$ | (Aldrich) |

| | |
|---|---|
| L 2830: | Desmophen® L 2830 (Covestro AG), Aliphatisches Polyetherpolyol mit OHZ 28 mg KOH/g, einer Molmasse von 4000 Da und ca. 90 mol-% primären OH-Endgruppen und einer Viskosität 860 mPas bei 25 °C. |
| TCPP | Levagard PP® (Lanxess AG), Trischlorisopropylphosphat |
| B 8433 | Tegostab® B844 (Evonik Industries AG), Stabilisator-Silikon |
| B 8325 | Tegostab® B8325 (Evonik Industries AG), Stabilisator-Silikon |
| DB | Desmorapid® DB (Covestro AG), Aktivator für die Herstellung von Polyurethan-Hartschaumstoffen |
| 1792 | Desmorapid® 1792 (Covestro AG), Zubereitung enthaltend Diethylenglykol und Kaliumacetat; Trimersisierungskatalysator. |
| A30 | Niax* Catalyst A-30 (Momentive Performance Materials Inc.), Tertiäres Amin. Katalysator für die Wasserreaktion. |
| 117 | Addocat® 117 (Lanxess AG), tertiäres Amin. Katalysator für die Urethanreaktion |
| Wasser | entionisiertes Wasser |
| n-Pentan | (Azelis) |
| 44V70L | Desmodur® 44V70 L (Covestro AG), MDI-Isocycanat mit einem NCO-Gehalt von 30 bis 32 Gew.-% |
| T80 | Desmodur® T80 (Covestro AG), TDI-Isocycanat mit einem NCO-Gehalt von mind. 48 Gew.-% |
| T65N | Desmodur® T65N (Covestro AG), TDI-Isocycanat mit einem NCO-Gehalt von mind. 48 Gew.-% |

1.2 Verwendete Methoden

Die Analysen wurden wie folgt durchgeführt:

Dynamische Viskosität:

Rheometer MCR 51 der Firma Anton Paar entsprechend DIN 53019 mit einem Messkegel CP 50-1, Durchmesser 50 mm, Winkel 1° bei Scherraten von von 25, 100, 200 und 500 $s^{-1}$. Die erfindungsgemäßen und nicht erfindungsgemäßen Polyesterpolyole zeigen von der Scherrate unabhängige Viskositätswerte.

| | |
|---|---|
| Hydroxylzahl: | gemäß DIN 53240-1 (Verfahren ohne Katalysator, Juni 2013) ermittelt. |
| Säurezahl: | gemäß DIN 51639-1 (November 2014) ermittelt. |
| Aminzahl: | gemäß DIN EN ISO 2114 (Juni 2002) ermittelt. |
| Rohdichte: | gemäß DIN EN ISO 845 (Oktober 2009) ermittelt. |
| Brandeigenschaften: | für Hartschäume gemäß DIN 4102-1 (Mai 1998) bestimmt. für Weichschäume gemäß DIN 75200 (September 1980) bestimmt. |
| StauchhärteHartschaum: | Druckspannung bei 10 % Stauchung gemäß DIN EN ISO 844 (November 2014) bestimmt. |
| StauchhärteWeichschaum: | Druckspannung bei 40 % Stauchung gemäß DIN EN ISO 3386-1 (Oktober 2015) bestimmtOffenzelligkeit: gemäß DIN EN ISO 4590 (Dezember 2016, Verfahren 1) mit AccuPyc 1330 bestimmt |
| Dimensionsstabillität: | gemäß DIN ISO 2796 (Januar 1986) bestimmt |
| Schmelzpunkt: | Es wird bestimmt, ob der Schmelzpunkt der Polyester-Polyole unterhalb der Raumtemperatur liegt. Hierzu wird das Polyester-Polyol nach der Herstellung für mindestens 4 Wochen bei Raumtemperatur (23 °C) gelagert und optisch überprüft, ob das Polyol homogen und im flüssigen Aggregatzustand bleibt. Polyester-Polyole die während dieser Lagerung kristallisieren, Feststoff bilden oder trüb werden, werden verworfen. |

**2. Polyester Synthese**

2.1 Zweistufige Synthese Anthranilsäure/Trimellitsäureanhydrid/Glutarsäure (Vergleichsbeispiel, nicht erfindungsgemäßes Verfahren)

In einem 6L-4-Halsrundkolben, ausgestattet mit mechanischem Rührwerk, Heizpilz, Sumpfthermometer, Stickstoff-Gasanschluss, Membranpumpen-Vakuum-Anschluss und einer 40cm-Füllstoffkolonne mit aufgesetztem Kolonnenkopf und Intensivkühler, wurden unter Stickstoff-Durchleitung 5 L Essigsäure vorgelegt. Dazu werden Trimellitsäureanhydrid (100 g, 0,52 mol) und Anthranilsäure (71 g, 0,52 mol) zu der Essigsäure gegeben. Die Reaktionsmischung wird auf 120 °C Sumpftemperatur erhitzt und für 17 h am Rückfluss erhitzt. Der Reaktionsansatz wird auf Raumtemperatur abgekühlt und der entstehende Niederschlag abfiltriert. Der Feststoff wird mit Wasser (2 x 100 mL) gewaschen und anschließend über Nacht bei 80 °C und dann für 7 h bei 100 °C im Trockenschrank getrocknet. Es werden 102 g (0,33 mol, Ausbeute: 63%) eines farblosen Pulvers erhalten. Folgende Analytik bestätigt die Struktur des gewünschten Produktes (N-(2-Carboxyphenyl)-5-carboxy-phthalimid).

Säurezahl (mg KOH/g): 360 (Theorie: 360)

In einem zweiten Schritt wurden in einem 2L-4-Halsrundkolben, ausgestattet mit mechanischem Rührwerk, Heizpilz, Sumpfthermometer, Stickstoff-Gasanschluss, Membranpumpen-Vakuum-Anschluss und einer 40cm-Füllstoffkolonne mit aufgesetztem Kolonnenkopf und Intensivkühler, unter Stickstoff-Durchleitung 349 g (3,29 mol) Diethylenglykol vorgelegt. Dazu wurden technische Glutarsäure (134 g, 1,00 mol) und N-(2-Carboxyphenyl)-5-carboxy-phthalimid (311 g, 1,00 mol) gegeben und die Reaktionsmischung über 3 Stunden auf 200 °C Sumpftemperatur erhitzt, wobei Wasser abdestilliert wird. Nach 1 h bei 200 °C wurde $SnCl_2 \cdot 2H_2O$ (14 mg) zugegeben und die Reaktionsmischung wurde für weitere 60 Stunden bei 200-210 °C Sumpftemperatur im Vakuum gerührt. Der Ansatz wurde abgekühlt, Diethylenglykol (50 g, 0,47 mol) wurde zugegeben und der Ansatz wurde für 9 Stunden bei 200 °C Sumpftemperatur im Vakuum gerührt. Nach Abkühlen wurden folgende Eigenschaften des Polyesters festgestellt:

Hydroxylzahl (mg KOH/g): 199
Säurezahl (mg KOH/g): 2,0
Viskosität (mPa*s bei 50 °C): 4000

2.2 Eintopf-Synthese Anthranilsäure/Trimellitsäureanhydrid/Glutarsäure (erfindungsgemäßes Verfahren)

In einem 2L-4-Halsrundkolben, ausgestattet mit mechanischem Rührwerk, Heizpilz, Sumpfthermometer, Stickstoff-Gasanschluss, Membranpumpen-Vakuum-Anschluss und einer 40cm-Füllstoffkolonne mit aufgesetztem Kolonnenkopf und Intensivkühler, wurden unter Stickstoff-Durchleitung Diethylenglyokol (567 g, 5,34 mol) vorgelegt. Anthranilsäure (69 g, 0,50 mol) und Trimellitsäureanhydrid (96 g, 0,50 mol) wurden zugegeben und der Ansatz wurde über 30 min auf 150 °C Sumpftemperatur geheizt. Nach 3 Stunden wurde der Ansatz abgekühlt und technische Glutarsäure (403 g, 3,00 mol) zugegeben. Der Ansatz wurde über 40 min auf 200 °C erhitzt und Wasser wurde ab destilliert. Nach 2 Stunden wurde der Ansatz abgekühlt, $SnCl_2 \cdot 2H_2O$ (20 mg) zugegeben und anschließend für 3 d bei 200 °C Sumpftemperatur im Vakuum gerührt. Der Ansatz wurde abgekühlt, Diethylenglykol (33 g, 0,31 mol) wurde zugegeben und der Ansatz wurde für 6 Stunden bei 200 °C Sumpftemperatur im Vakuum gerührt. Nach Abkühlen wurden folgende Eigenschaften des Polyesters festgestellt:

Hydroxylzahl (mg KOH/g): 203
Säurezahl (mg KOH/g): 1,7
Viskosität (mPa*s bei 25 °C): 2500

2.3 Eintopf-Synthese Anthranilsäure/Trimellitsäureanhydrid/Adipinsäure für Weichschaum (erfindungsgemäßes Verfahren)

In einem 2L-4-Halsrundkolben, ausgestattet mit mechanischem Rührwerk, Heizpilz, Sumpfthermometer, Stickstoff-Gasanschluss, Membranpumpen-Vakuum-Anschluss und einer 40cm-Füllstoffkolonne mit aufgesetztem Kolonnenkopf und Intensivkühler, wurden unter Stickstoff-Durchleitung 482 g Diethylenglykol (4,54 mol) vorgelegt. Anthranilsäure (76 g, 0,55 mol) und Trimellitsäureanhydrid (106 g, 0,55 mol) wurden zugegeben und das Reaktionsgemisch wurde für 4 Stunden auf 150 °C Sumpftemperatur erhitzt. Es wurde auf 110 °C Sumpftemperatur abegkühlt und 485 g Adipinsäure (3,32 mol) zugegeben und die Reaktion wurde über 1 Stunde auf 200 °C Sumpftemperatur erhitzt, wobei Wasser abdestilliert wurde. Es wurde $SnCl_2 \cdot 2H_2O$ (23 mg) zugegeben und die Reaktion wurde für 23 Stunden bei 200°C Sumpftemperatur im Vakuum gerührt. Es wurden 15 g Diethylenglykol zugegeben und der Ansatz wurde für weitere 46 Stunden bei 200 °C Sumpftemperatur im Vakuum gerührt. Es wurden 18 g Diethylenglykol zugegeben und der Ansatz wurde für weitere 16 Stunden bei 200 °C Sumpftemperatur im Vakuum gerührt. Nach Abkühlen wurden folgende Eigenschaften des Polyesters festgestellt:

Hydroxylzahl (mg KOH/g): 77
Säurezahl (mg KOH/g): 2,3
Viskosität (mPa*s bei 25 °C): 16000

2. 4 Eintopf-Synthese Anthranilsäure/Phthalsäureanhydrid/Adipinsäure (erfindungsgemäßes Verfahren)

In einem 4L-4-Halsrundkolben, ausgestattet mit mechanischem Rührwerk, Heizpilz, Sumpfthermometer, Stickstoff-Gasanschluss, Membranpumpen-Vakuum-Anschluss und einer 40cm-Füllstoffkolonne mit aufgesetztem Kolonnenkopf und Intensivkühler, wurden unter Stickstoff-Durchleitung 849g Diethylenglykol (8,00 mol) vorgelegt. Dazu wurden 296 g Phthalsäureanhydrid (2,00 mol) und 274 g Anthranilsäure (2,00 mol) gegeben und die Reaktionsmischung wurde für 3 Stunden bei 150 °C Sumpftemperatur gerührt. Nach Abkühlen auf 110 °C Sumpftemperatur wurde Adipinsäure (587 g, 4,02 mol) zugegeben und die Reaktionsmischung wurde über 2 Stunden auf 200 °C Sumpftemperatur erhitzt, wobei Wasser abdestilliert wurde. Es wurden 36 mg $SnCl_2 \cdot 2H_2O$ zugegeben und der Ansatz wurde für 66 Stunden bei 200 bis 210 °C Sumpftemperatur im Vakuum gerührt. Nach Abkühlen wurden folgende Eigenschaften des Polyesters festgestellt:

Hydroxylzahl (mg KOH/g): 177
Säurezahl (mg KOH/g): 2,0
Viskosität (mPa*s bei 25 °C): 2330

2. 5 Eintopf-Synthese Asparaginsäure/Phthalsäureanhydrid/Adipinsäure (erfindungsgemäßes Verfahren)

In einem 2L-4-Halsrundkolben, ausgestattet mit mechanischem Rührwerk, Heizpilz, Sumpfthermometer, Stickstoff-Gasanschluss, Membranpumpen-Vakuum-Anschluss und einer 40cm-Füllstoffkolonne mit aufgesetztem Kolonnenkopf und Intensivkühler, wurden unter Stickstoff-Durchleitung 497 g Diethylenglykol (4,68 mol) vorgelegt. Dazu wurden 148 g Phthalsäureanhydrid (1,00 mol) und 133 g Asparaginsäure (1,00 mol) gegeben und die Reaktionsmischung wurde für 4,5 Stunden bei 150 °C Sumpftemperatur gerührt. Nach Abkühlen auf 120 °C Sumpftemperatur wurde Adipinsäure (292 g, 2,00 mol) zugegeben und die Reaktionsmischung wurde über 1,5 Stunden auf 200 °C Sumpftemperatur erhitzt, wobei Wasser abdestilliert wurde. Es wurden 19 mg $SnCl_2 \cdot 2H_2O$ zugegeben und der Ansatz wurde für 19 Stunden bei 200 °C Sumpftemperatur im Vakuum gerührt. Nach Abkühlen wurden folgende Eigenschaften des Polyesters festgestellt:

Hydroxylzahl (mg KOH/g): 180
Säurezahl (mg KOH/g): 2,0
Viskosität (mPa*s bei 25 °C): 4600

2. 6 Eintopf-Synthese Glutaminsäure/Phthalsäureanhydrid/Adipinsäure (erfindungsgemäßes Verfahren)

In einem 2L-4-Halsrundkolben, ausgestattet mit mechanischem Rührwerk, Heizpilz, Sumpfthermometer, Stickstoff-Gasanschluss, Membranpumpen-Vakuum-Anschluss und einer 40cm-Füllstoffkolonne mit aufgesetztem Kolonnenkopf und Intensivkühler, wurden unter Stickstoff-Durchleitung 500 g Diethylenglykol (4,71 mol) vorgelegt. Dazu wurden 148 g Phthalsäureanhydrid (1,00 mol) und 147 g Glutaminsäure (1,00 mol) gegeben und die Reaktionsmischung wurde für 2,5 Stunden bei 150 °C Sumpftemperatur gerührt. Nach Abkühlen auf 120 °C Sumpftemperatur wurde Adipinsäure (292 g, 2,00 mol) zugegeben und die Reaktionsmischung wurde über 2 Stunden auf 200 °C Sumpftemperatur erhitzt, wobei Wasser abdestilliert wurde. Es wurden 19 mg $SnCl_2 \cdot 2H_2O$ zugegeben und der Ansatz wurde für 25 Stunden bei 200 °C Sumpftemperatur im Vakuum gerührt. Es wurden 47 g Diethylenglykol (0,44 mol) zugegeben und der Ansatz wurde für weitere 15 Stunden bei 200 °C Sumpftemperatur im Vakuum gerührt. Nach Abkühlen wurden folgende Eigenschaften des Polyesters festgestellt:

Hydroxylzahl (mg KOH/g): 202
Säurezahl (mg KOH/g): 0,8
Viskosität (mPa*s bei 25 °C): 2350

2. 7 Eintopf-Synthese Glutaminsäure/Phthalsäureanhydrid (erfindungsgemäßes Verfahren)

In einem 2L-4-Halsrundkolben, ausgestattet mit mechanischem Rührwerk, Heizpilz, Sumpfthermometer, Stickstoff-Gasanschluss, Membranpumpen-Vakuum-Anschluss und einer 40cm-Füllstoffkolonne mit aufgesetztem Kolonnenkopf und Intensivkühler, wurden unter Stickstoff-Durchleitung 502 g Diethylenglykol (4,73 mol) vorgelegt. Dazu wurden 305 g Phthalsäureanhydrid (2,06 mol) und 304 g Glutaminsäure (2,07 mol) gegeben und die Reaktionsmischung wurde für 2,5 Stunden bei 150 °C Sumpftemperatur gerührt. Die Reaktionsmischung wurde über 2 Stunden auf 210 °C Sumpftemperatur erhitzt, wobei Wasser abdestilliert wurde. Es wurden 20 mg $SnCl_2 \cdot 2H_2O$ zugegeben und der Ansatz wurde für 2 Stunden bei 180-210 °C Sumpftemperatur im Vakuum gerührt. Es wurden 98 g Diethylenglykol (0,92 mol) zugegeben und der Ansatz wurde für weitere 11 Stunden bei 200-210 °C Sumpftemperatur im Vakuum gerührt. Nach Abkühlen wurden folgende Eigenschaften des Polyesters festgestellt:

Hydroxylzahl (mg KOH/g): 297
Säurezahl (mg KOH/g): 0,8
Viskosität (mPa*s bei 25 °C): 6500

2. 8 Eintopf-Synthese Lysin/Phthalsäureanhydrid/Glutarsäure (erfindungsgemäßes Verfahren)

In einem 2L-4-Halsrundkolben, ausgestattet mit mechanischem Rührwerk, Heizpilz, Sumpfthermometer, Stickstoff-Gasanschluss, Membranpumpen-Vakuum-Anschluss und einer 40cm-Füllstoffkolonne mit aufgesetztem Kolonnenkopf und Intensivkühler, wurden unter Stickstoff-Durchleitung 400 g Diethylenglykol (3,77 mol) vorgelegt. Dazu wurden 355 g Phthalsäureanhydrid (2,40 mol) und 176 g Lysin (1,20 mol) gegeben und die Reaktionsmischung wurde für 2,5 Stunden bei 150 °C Sumpftemperatur gerührt. Es wurde technische Glutarsäure (178 g, 1,33 mol) zugegeben und die Reaktionsmischung wurde über 2 Stunden auf 200 °C Sumpftemperatur erhitzt, wobei Wasser abdestilliert wurde. Es wurden 20 mg $SnCl_2 \cdot 2H_2O$ zugegeben und der Ansatz wurde für 16 Stunden bei 200 °C Sumpftemperatur im Vakuum gerührt. Nach Abkühlen wurden folgende Eigenschaften des Polyesters festgestellt:

Hydroxylzahl (mg KOH/g): 182
Säurezahl (mg KOH/g): 0,5
Viskosität (mPa*s bei 25 °C): 17000

2. 9 Eintopf-Synthese Anthranilsäure/Trimellitsäureanhydrid/Glutarsäure (erfindungsgemäßes Verfahren, Rezeptur entspricht zweitufigem Verfahren des Beispiels 2.1)

In einem 2L-4-Halsrundkolben, ausgestattet mit mechanischem Rührwerk, Heizpilz, Sumpfthermometer, Stickstoff-Gasanschluss, Membranpumpen-Vakuum-Anschluss und einer 40cm-Füllstoffkolonne mit aufgesetztem Kolonnenkopf und Intensivkühler, wurden unter Stickstoff-Durchleitung 349 g Diethylenglykol (3,29 mol) vorgelegt. Dazu wurden 192 g Trimellitsäureanhydrid (1,00 mol) und 137 g Anthranilsäure (1,00 mol) gegeben und die Reaktionsmischung wurde für 4 Stunden bei 150 °C Sumpftemperatur gerührt. Es wurde technische Glutarsäure (134 g, 1,00 mol) zugegeben und die Reaktionsmischung wurde über 2 Stunden auf 200 °C Sumpftemperatur erhitzt, wobei Wasser abdestilliert wurde. Es wurden 15 mg $SnCl_2 \cdot 2H_2O$ zugegeben und der Ansatz wurde für 43 Stunden bei 210 °C Sumpftemperatur im Vakuum gerührt. Es wurden 45 g Diethylenglykol (0,42 mol) zugegeben und der Ansatz wurde für weitere 5 Stunden bei 200 °C Sumpftemperatur im Vakuum gerührt. Nach Abkühlen wurden folgende Eigenschaften des Polyesters festgestellt:

Hydroxylzahl (mg KOH/g): 198

Säurezahl (mg KOH/g): 1,2

Viskosität (mPa*s bei 50 °C): 4050

**3. Polyurethan-Hartschäume**

Aus den oben beschriebenen Polyester-Polyolen der OH-Zahl 150 bis 250 wurden nach folgender allgemeiner Vorschrift Polyurethan-Hartschäume hergestellt. Alle Teile sind Gewichtsteile:

| L 2830 | 12 Teile |
|--------|----------|

(fortgesetzt)

| Polyester (OH-Zahl 150-250) | 73 Teile |
|---|---|
| TCPP | 15 Teile |
| B 8443 | 3 Teile |
| Wasser | 0,8 Teile |
| DB | 1,7 Teile |
| 1792 | 2,8 Teile |
|  |  |
| n- Pentan | Ca. 13,4 Teile |
|  |  |
| 44V70L | Ca. 200 Teile |

Die exakte Menge n-Pentan wird entsprechend der gewünschten Schaum-Rohdichte berechnet. Die exakte Menge des Isocyanates V70L wird so berechnet, dass eine Kennzahl (100*molares Verhältnis von NCO-Gruppen zu NCO-reaktiven-Gruppen) von 350 erreicht wird.
Die Polyole, Stabilisatoren, Wasser, Flammschutzmittel & Katalysatoren werden 60 s mittels eines Pendraulikrührers bei 1000 U/min verrührt. n-Pentan wird zugegeben und bei 500-1000 U/min homogenisiert. Das Isocyanat wird zugegeben und 10 s bei 4200 U/min verrührt. Das Gemisch wird in eine Papierform gegossen und ausreagieren gelassen. Nach Lagerung bei Raumtemperatur über Nacht wird der Hartschaum zersägt und analysiert.
Der Vergleichs-Standardpolyester wurde aus Glutarsäure und Ethylenglykol hergestellt (OH-Zahl 216, Viskosität bei 25 °C 1980 mPas).

| Polyester | Standard | 2.1 | 2.2 | 2.4 | 2.5 | 2.6 | 2.7 | 2.8 |
|---|---|---|---|---|---|---|---|---|
| **Rohdichte [g/L]** | 40 | 40 | 42 | 41 | 41 | 41 | 42 | 42 |
| **Brandtest [cm]** | 10 | 8 | 10 | 12 | 13 | 11 | 12 | 10 |
| **Druckspannung bei** 10 % **Stauchung , parallel; quer [kPa]** | 345; 153 | 429; 183 | 387; 164 | 364; 164 | 378; 155 | 402; 151 | 424; 169 | 356; 220 |
| **Offenzelligkeit [%]** | 9,3 | 5,2 | 9,8 | 6,7 | 6,6 | 7,8 | 8 | 7,3 |
| **Dimensionsstabilitä t-22 °C [%]** | 0,1; 0,3; 0,2 | 0,1; 0,0; 0,0 | 0,1; 0,2; 0,2 | 0,2; 0,2; 0,1 | 0,8; 0,0; 0,1 | 0,8; 0,1; 0,1 | 0,2; 0,4; 0,5 | 0,3; 0,4; 0,3 |
| **Dimensionsstabilitä t 100 °C [%]** | 0,5; 0,4; 0,7 | 0,5; 0,0; 0,1 | 0,5; 0,4; 0,5 | 0,7; 0,3; 0,3 | 1,1; 0,5; 0,6 | 0,6; 0,4; 0,4 | 1,2; 0,5; 0,1 | 0,3; 0,3; 0,5 |

**4. Polyurethan-Weichschäume**

Aus dem oben beschriebenen Polyester-Polyol der OH-Zahl 77 mg KOH/g wurde nach folgender allgemeiner Vorschrift Polyurethan-Weichschäume hergestellt. Alle Teile sind Gewichtsteile:

| Polyester (OH-Zahl 50-100) | 150 Teile |
|---|---|
| B 8325 | 1,2 Teile |
| Wasser | 5,4 Teile |
| A30 | 0,3 Teile |
| 117 | 0,3 Teile |

(fortgesetzt)

|  |  |
|---|---|
| T80 | 30 bis 40 Teile |
| T65N | 30 bis 40 Teile |

Die exakte Menge der Isocyanate wird so berechnet, dass eine Kennzahl (100*molares Verhältnis von NCO-Gruppen zu NCO-reaktiven-Gruppen) von 100 erreicht wird. Desmodur T80 und Desmodur T65N wird zu gleichen Teilen eingesetzt.

Die Polyole, Stabilisatoren, Wasser & Katalysatoren werden 30 s mittels eines Pendraulikrührers bei 500-1000 U/min verrührt. Die Isocyanate werden zugegeben und 10 s bei 1000-1400 U/min verrührt. Das Gemisch wird in eine Papierform gegossen und ausreagieren gelassen. Nach Lagerung bei Raumtemperatur über Nacht wird der Weichschaum zersägt und analysiert.

Der Vergleichs-Standardpolyester wurde aus Trimethylolpropan, Diethylenglykol und Adipinsäure hergestellt (OH-Zahl 63 mg KOH/g, Viskosität bei 25 °C ca. 20000 mPas).

| Polyester | Standard | 2.3 |
|---|---|---|
| Rohdichte [g/L] | 36 | 40 |
| Brandgeschwindigkeit [mm/min] | 86 | 50 |
| Druckspannung bei 40 % Stauchung [kPa] | 6,30 | 7,10 |

**Patentansprüche**

1. Verfahren zur Herstellung von Hydroxylgruppen-terminierten Polyester-Polyolen (A), **dadurch gekennzeichnet, dass**

   in einem ersten Verfahrensschritt zunächst Imidgruppen-enthaltende Mono- oder Polycarbonsäuren (B) durch Umsetzung von

   (B.1) mindestens einer Aminosäure, welche eine oder mehrere Aminogruppen und eine oder mehrere Säuregruppen aufweist, mit
   (B.2) mindestens einem Carbonsäureanhydrid, welches eine oder mehrere Anhydridgruppen und gegebenenfalls eine oder mehrere freie Säuregruppen aufweist,
   in Gegenwart von
   (C) mindestens einem Di- und/oder Polyol mit einem Molekulargewicht von 62 bis 1000 g/mol,

   hergestellt werden, und in einem zweiten Verfahrensschritt das im ersten Verfahrensschritt erhaltene Reaktionsgemisch

   - bevorzugt ohne Aufreinigung,
   - *gegebenenfalls* unter Zusatz von weiterer Komponente B.2 und/oder weiterer Komponente C und/oder (D) weiteren Mono- und/oder Polycarbonsäuren, die nicht unter die Definition der Komponenten (B) und (B.2) fallen,

   unter Polykondensationsbedingungen verestert wird,
   wobei gegebenenfalls im ersten Verfahrensschritt und/oder im zweiten Verfahrensschritt Hilfs- und Zusatzstoffe (E) verwendet werden.

2. Verfahren zur Herstellung von Hydroxylgruppen-terminierten Polyester-Polyolen (A) gemäß Anspruch 1, wobei im ersten Verfahrensschritt neben Komponente (C) kein weiteres Lösemittel zugesetzt wird.

3. Verfahren zur Herstellung von Hydroxylgruppen-terminierten Polyester-Polyolen (A) gemäß einem der Ansprüche 1 oder 2, **dadurch gekennzeichnet, dass** der erste Verfahrensschritt bei Temperaturen von 25°C bis 200 °C, bevorzugt von 80 bis 180 °C durchgeführt wird, und dass der zweite Verfahrensschritt bei Temperaturen von 150 bis 250 °C, bevorzugt von 180 bis 220°C und bei vermindertem Druck im Bereich von 0,1 bis 300 mbar, bevorzugt 1 bis 200 mbar durchgeführt wird.

4. Hydroxylgruppen terminierte Polyester-Polyole (A), die erhältlich sind nach dem Verfahren gemäß einem der Ansprüche 1 bis 3, und die bevorzugt einen Schmelzpunkt < 23°C, besonders bevorzugt ≤ 20°C aufweisen.

5. Verfahren gemäß einem der Ansprüche 1 bis 3 oder Hydroxylgruppen-terminierten Polyester-Polyole (A) gemäß Anspruch 4, wobei bei der Herstellung der Hydroxylgruppen-terminierten Polyester-Polyole (A) neben den Komponenten (B.1), (B.2), (C), (D) und (E) eine weitere Komponenten (F) verwendet wird, bei der es sich um Di- und Polyole, die nicht unter die Definition der Komponente (C) fallen, handelt, und wobei und der Anteil der Komponenten (B.1), (B.2), (C), (D) und (E) an der Gesamtmenge aller eingesetzten Komponenten ≥ 80, bevorzugt ≥ 90, besonders bevorzugt ≥ 95 Gewichtsprozent beträgt.

6. Verfahren gemäß einem der Ansprüche 1 bis 3 oder Hydroxylgruppen-terminierten Polyester-Polyole (A) gemäß Anspruch 4, wobei bei Herstellung der Hydroxylgruppen-terminierten Polyester-Polyole (A) ausschließlich die Komponenten (B.1), (B.2), (C), (D) und (E) eingesetzt werden.

7. Verfahren gemäß einem der Ansprüche 1 bis 3, 5 oder 6, oder Hydroxylgruppen-terminierte Polyester-Polyole (A) gemäß einem der Ansprüche 4 bis 6, wobei bei der Umsetzung der Komponenten (B.1) und (B.2) das molare Verhältnis von Aminogruppen aus den Aminosäuren (B.1) zu Anhydridgruppen aus den Carbonsäureanhydriden (B.2) im Bereich von 1,5:1 bis 1:1,5, bevorzugt 0,9:1 bis 1:0,9, besonders bevorzugt 0,95:1 bis 1:0,95 liegt.

8. Verfahren gemäß einem der Ansprüche 1 bis 3 oder 5 bis 7, oder Hydroxylgruppen-terminierte Polyester-Polyole (A) gemäß einem der Ansprüche 4 bis 7, **dadurch gekennzeichnet, dass** die Aminosäuren (B.1) ausgewählt sind aus der Gruppe bestehend aus Monoamino-monocarbonsäure, Monoamino-dicarbonsäure, Diamino-monocarbonsäure und Diamino-dicarbonsäure.

9. Verfahren gemäß einem der Ansprüche 1 bis 3 oder 5 bis 8, oder Hydroxylgruppen-terminierte Polyester-Polyole (A) gemäß einem der Ansprüche 4 bis 8, **dadurch gekennzeichnet, dass** die Aminosäuren (B.1) ausgewählt sind aus der Gruppe bestehend aus Anthranilsäure (o-Aminobenzoesäure), m-Aminobenzoesäure, p-Aminobenzoesäure, Alanin, Arginin, Asparagin, Asparaginsäure, Cystein, Glutamin, Glutaminsäure, Glycin, Histidin, Isoleucin, Leucin, Lysin, Methionin, Phenylalanin, Serin, Threonin, Tryptophan, Tyrosin, Valin, Ornithin, 3-Aminopropionsäure, 2-Aminobuttersäure, 4-Aminobuttersäure, 6-Aminocapronsäure, 2-Amino-2-methylpropionsäure, 11-Aminoundecansäure, Homoserin.

10. Verfahren gemäß einem der Ansprüche 1 bis 3 oder 5 bis 9, oder Hydroxylgruppen-terminierte Polyester-Polyole (A) gemäß einem der Ansprüche 4 bis 9, **dadurch gekennzeichnet, dass** die Carbonsäureanhydride (B.2) ausgewählt sind aus der Gruppe bestehend aus Phthalsäureanhydrid, Tetrachlorphthalsäureanhydrid, 3-Chloro-Phthalsäureanhydrid, Trimellitsäureanhydrid, Hemimellitsäureanhydrid, Mellitsäureanhydrid, Pyromellitsäuredianhydrid, Maleinsäureanhydrid, Citraconsäureanhydrid, Itaconsäureanhydrid, Bernsteinsäureanhydrid, 3,4,9,10-Perylentetracarbonsäuredianhydrid, 1,4,5,8-Naphthalintetracarbonsäuredianhydrid, 1,8-Naphthalsäureanhydrid, 3,3',4,4'-Biphenyltetracarbonsäuredianhydrid, Derivate der genannten Anhydride, wie z.B. Alkyl- oder Alkenylbernsteinsäuren mit unverzweigten oder verzweigten C1 bis C24 -Alkyl- bzw. -Alkenylketten, wie (1-Dodecen-1-yl) oder 2-Dodecen-1-yl)bernsteinsäureanhydrid, n-Octenyl-Bernsteinsäureanhydrid, Tetradecenylbernsteinsäureanhydrid, Hexadecenylbernstein-säureanhydrid, Octadecenylbernsteinsäureanhydrid, Alkyl- und/oder Alkenylmaleinsäuren mit unverzweigten oder verzweigten C1 bis C24 -Alkyl- bzw. -Alkenylketten, wie Dimethylmaleinsäureanhydrid, n-Dodecenylmaleinsäureanhydrid, und Diels-Alder-Adduke aus Furanen und z.B. Maleinsäureanhydrid.

11. Verfahren gemäß einem der Ansprüche 1 bis 3 oder 5 bis 10, oder Hydroxylgruppen-terminierte Polyester-Polyole (A) gemäß einem der Ansprüche 4 bis 10, **dadurch gekennzeichnet**, die Di- und Polyole (C) ausgewählt sind aus der Gruppe bestehend aus Ethylenglykol, 1,2-Propandiol, 1,3-Propandiol, 1,4-Butandiol, 2-Methylpropandiol-1,3, 1,5-Pentandiol, Neopentylglykol 1,6-Hexandiol, 3-Methylpentan-1,5-diol, 2,3-Butandiol, Diethylenglykol, Triethylenglykol, Tetraethylenglykol, Dipropylenglykol, Tripropylenglykol, sowie Glycerin, 1,1,1-Trimethylolpropan, Pentaerythrit, Rizinusöl, Oligomere des 1,4-Butylenglykols, Polyetherpolyole, wie Poly(oxyalkylen)polyole und Polyesterpolyole.

12. Verfahren gemäß einem der Ansprüche 1 bis 3 oder 5 bis 11, oder Hydroxylgruppen-terminierte Polyester-Polyole (A) gemäß einem der Ansprüche 4 bis 11, **dadurch gekennzeichnet, dass** die Mono- und/oder Polycarbonsäuren (D) ausgewählt sind aus der Gruppe bestehend aus Oxalsäure, Malonsäure, Bernsteinsäure, Glutarsäure, Adipinsäure, Pimelinsäure, Korksäure, Azelainsäure, Sebacinsäure, Undecandisäure, Dodecandisäure, Brassylsäure, Tetradecandisäure, Thapsiasäure, Phthalsäure, Isophthalsäure, Terephthalsäure, Maleinsäure, Fumarsäure, Citraconsäure, Mesaconsäure, Ölsäure, Ricinolsäure und Furandicarbonsäure.

13. Verfahren gemäß einem der Ansprüche 1 bis 3 oder 5 bis 12, oder Hydroxylgruppen-terminierte Polyester-Polyole (A) gemäß einem der Ansprüche 4 bis 12, **dadurch gekennzeichnet, dass** die Hydroxylgruppen-terminierten Polyester-Polyole (A) OH-Zahlen von 20 bis 500 mg KOH/g und zahlenmittlere Funktionaltäten von 1,4 bis 3,5, aufweisen.

14. Verfahren gemäß einem der Ansprüche 1 bis 3 oder 5 bis 13, oder Hydroxylgruppen-terminierte Polyester-Polyole (A) gemäß einem der Ansprüche 4 bis 13, **dadurch gekennzeichnet, dass** mindestens eine der Komponenten (B.1), (B.2), (C), (D), (E) und (F) biobasiert ist.

15. Verwendung der Hydroxylgruppen-terminierte Polyester-Polyole (A) gemäß einem der Ansprüche 4 bis 14 zur Herstellung von Polyurethanen, bevorzugt Polyurethan-Schäumen.

**Europäisches Patentamt**
**European Patent Office**
**Office européen des brevets**

# EUROPÄISCHER RECHERCHENBERICHT

Nummer der Anmeldung

EP 17 20 4379

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | FR 1 445 078 A (BAYER AG) 8. Juli 1966 (1966-07-08) * Seite 1 - Seite 3 * ----- | 1-15 | INV. C08G18/46 C08G73/10 C08G73/16 |
| X | DE 20 23 456 A1 (SCHWEIZERISCHE ISOLAWERKE) 4. November 1971 (1971-11-04) * Beispiel 1 * ----- | 1-15 | |

RECHERCHIERTE SACHGEBIETE (IPC)

C08G

Der vorliegende Recherchenbericht wurde für alle Patentansprüche erstellt

| Recherchenort | Abschlußdatum der Recherche | Prüfer |
|---|---|---|
| München | 4. Mai 2018 | Buestrich, Ralf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 20 4379

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-05-2018

| Im Recherchenbericht angeführtes Patentdokument | Datum der Veröffentlichung | Mitglied(er) der Patentfamilie | Datum der Veröffentlichung |
|---|---|---|---|
| FR 1445078 A | 08-07-1966 | KEINE | |
| DE 2023456 A1 | 04-11-1971 | AT 326238 B | 25-11-1975 |
| | | BE 750385 A | 16-10-1970 |
| | | CA 967699 A | 13-05-1975 |
| | | CH 532649 A | 15-01-1973 |
| | | DE 2023456 A1 | 04-11-1971 |
| | | FI 55675 B | 31-05-1979 |
| | | FR 2047626 A5 | 12-03-1971 |
| | | GB 1316872 A | 16-05-1973 |
| | | NL 7007021 A | 17-11-1970 |
| | | NO 133731 B | 08-03-1976 |
| | | SE 364969 B | 11-03-1974 |
| | | YU 120270 A | 30-04-1979 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3217014 B1
- US 1922451 A
- US 2674619 A
- US 1922459 A
- US 3190927 A
- US 3346557 A
- EP 0007502 A
- DE 1694142 A
- DE 1694215 A
- DE 1720768 A

**In der Beschreibung aufgeführte Nicht-Patentliteratur**

- Synthesis and Properties of Polyesterimides and their Isomers. **SUKUMAR MAITI ; SAJAL DAS.** Journal of Applied Polymer Sciene. Wiley & Sons, 1981, vol. 26, 957-978
- Kunststoffhandbuch, Band 7, Polyurethane. Reaction Polymers